# EUROPEAN PATENT SPECIFICATION

(11) **EP 1 605 617 B1**
(45) Date of publication and mention of the grant of the patent: **28.03.2007**
(21) Application number: 04291399.6
(22) Date of filing: 04.06.2004
(51) Int. Cl.: H04J 3/06, H04L 12/56, H04Q 3/68

(54) **Network element with improved lower order switching device arrangement and method for cross-connecting signals in a network element**
Netzelement mit verbesserter, niedriger Ordnung, Schaltungsanordnung und Verfahren zum Querverbinden von Signalen in einem Netzelement
Elément de réseau avec dispositif amélioré de commutation d'ordre inférieur et procédé d'interconnexion de signaux dans un élément de réseau

(43) Date of publication of application: 14.12.2005
(73) Proprietor: ALCATEL, 75008 Paris (FR)
(72) Inventor: Gastaldello, Stefano, 35037 Teolo (Padova) (IT); Razzetti, Luca, 20099 Sesto S. Giovanni (Milano) (IT); Franza, Andrea, 20133 Milano (IT); Menaldo, Cristiano, 35132 Padova (IT)
(74) Representative: Menzietti, Domenico

(56) References cited:
- EP-A- 0 660 554
- EP-A- 1 401 217

## Description

The present invention relates to the field of telecommunications, and in particular to the field of network elements. Even more in particular, the present invention relates to a network element for synchronous networks with an improved switching device arrangement and an improved method for cross-connecting synchronous signals.

In a synchronous network, for instance SDH or Sonet, all the timing signals are locked to a reference signal. Such a reference signal is carried along the whole network and it is used for synchronizing all the local oscillators of the network. However, these local oscillators may introduce errors while recovering the reference signal. Data signals generated in different network nodes may thus have different timing signals. In other words, data signals generated in different nodes may be not aligned.

In the following, reference will be mainly made to SDH standard terminology just for mere clarity reasons. However, it should be clear that the present invention relates to the field of synchronous networks, both SDH and Sonet and is not limited to SDH. As it is known, there is a direct correspondence between SDH numerical structures and Sonet numerical structures. For instance, STM frames of SDH hierarchy correspond to STS frames of Sonet; the Administrative Units are called AU in both cases; the Tributary Units are called TU in SDH and TV in Sonet; the Lower Order Virtual Containers are called LVC in SDH and VTSPE in Sonet; the pointing mechanisms are the same in both cases, the AU-pointers are substantially identical; finally, TU-pointers of SDH should be replaced with TV-pointers for Sonet.

It is well-known that the lower level of SDH hierarchy is constituted by the Lower Order Virtual Containers (LVC), numerical structures which allow to map the asynchronous or plesiochronous signals coming from local networks (ATM, PDH, IP) and to synchronize these signals to the reference timing signal. The LVCs are then time-multiplexed into higher order numerical structures (HVC); the HVCs are finally packed into STM-n frames. The STM-1 frame is the minimum information unit which can be transmitted along an SDH network.

In addition to the VC multiplexed data, a STM-n frame comprises Lower Order pointers (also termed TU-pointers) and Higher Order pointers (also termed AU-pointers). Said pointers define the phase shift between the starting byte of the VCs (LVC and HVC, respectively) and the reference frame (TU and AU respectively); therefore, a direct access to the single VC is allowed through said pointers.

In synchronous networks, traffic routing functions such as add-drop multiplexing and cross-connection are particularly simple to implement, thanks to the pointing mechanism.

Indeed, in a PDH plesiochronous network, the traffic routing functions require a complete demultiplexing of the signal back to lower bit rate, in order to extract single tributaries. In turn, said complete demultiplexing requires complicated multiple-stage equipments, needs a large integration area on the substrate and results in a large delay on the processed signals.

On the contrary, in a synchronous network it is possible to perform routing functions at a higher level. Indeed, in synchronous systems, it is directly possible to extract a single tributary thanks to the pointing mechanism. Hence, routing function does not require a demultiplexing of the whole frame back to the single tributary.

In particular, in a synchronous network, cross-connection can be either of higher order (HO cross-connection) or of lower order (LO cross-connection), according to the numerical structure which undergoes cross-connection (LVC and HVC, respectively).

It is well-known that cross-connection consists in exchanging the tributary position into the frame; said tributaries may be generated by different network nodes, and therefore may have different timing signals. Before cross-connecting them, a re-synchronization of the signals at the input of the switch device is then required.

In case of HO cross-connection, the position of the HVCs into the AU reference frames depends on the value of the AU-pointer. Re-synchronization of the HVCs then requires an adjustment of the AU-pointer value; this known function of synchronization of higher order tributaries is described in ITU-T G.783 Recommendation, where it is termed MSn/Sn_A Adaptation function. In case of LO cross-connection, a similar synchronization is needed, since the position of the LVCs into the reference frame depends on the cascaded AU-pointer and TU-pointer.

A network element with such a pointer processing apparatus is known from EP 1 401 217.

As far as SDH is concerned, the well-known synchronization function of lower order tributaries is described into ITU-T G.783 Recommendation, where it is termed Sn/Sm_A Adaptation function. This function is also known as Higher Path Adaptation (HPA). In the following, only the latter name will be used for simplicity. It must be noticed that a similar synchronization function of lower order tributaries is defined also in Sonet standard. However, for clarity reasons, in the following "Higher Path Adaptation" and/or the corresponding abbreviation "HPA" will be used for indicating the synchronization function both in SDH network and in Sonet network.

The HPA function consists in fixing the AU-pointer to a predetermined value; typically the predetermined value is 0. The TU pointer is then moved and its value is reconstructed such that the position of the LVC does not change into the reference frame. This results in a synchronization of the LVCs, which can be then exchanged by a switch device.

A well-known switch device for LO cross-connection in a synchronous network thus comprises a TDM matrix which exchanges the tributaries and HPA blocks which perform HPA synchronization, a HPA block being arranged at each input of said TDM matrix. It has to be noticed that reference frames at the input of the switch device have to be aligned; otherwise, proper blocks for MSn/Sn_A functions for the HO alignment must be provided at the input of the network element.

According to the known state of the art, both the TDM matrix and the HPA blocks are integrated in a single chip. It follows that the area available for the TDM matrix integration is consequently limited by the presence of HPA blocks. A reduced area available for the matrix results in a reduced connectivity, i.e. a reduction of the maximum number of incoming tributaries which can be processed by the switch device.

It is also known that a TDM matrix can be advantageously implemented by a so called Clos network (also termed Clos matrix). A Clos network can be obtained by splitting a NxN TDM matrix into multiple matrix stages, typically in three stages, with each stage comprising one or more TDM matrices with a size smaller than the NxN one. The number of matrices for each stage and their size are chosen in order to have a non-blocking switching. Further, if these parameters (number of stages, number of matrices at each stage and size of the matrices) are properly chosen, it is possible to reduce the number of connections with respect to a single NxN matrix.

It is also known that a LO cross-connection block of a network element in synchronous networks includes a number of switch devices, arranged according to a Clos network, each switch device being implemented on a separate chip and including one TDM matrix (or more TDM matrices) and a plurality of HPA blocks, in particular one HPA block for each input of each TDM matrix. Hence, in a LO cross-connection block of a network element implemented through a Clos network of switch devices, the area available on the single chip is still limited by the HPA blocks. Hence, using the Clos network configuration results in an increased number of the required HPA blocks compared with the single matrix configuration and thus in a reduction of the connectivity of the switch device compared with the single NxN matrix configuration.

Although the term "network element" usually indicates an apparatus performing a plurality of different functions on signals, for simplicity in the present description the term "network element" will indicate only the set of devices, part of a network element, implementing the functions related to the LO cross-connection.

The general object of the present invention is to provide a switch device arrangement and a network element comprising such a switch device arrangement which overcome the aforesaid problems.

In particular, a first object of the present invention is to provide a switch device arrangement and a network element comprising such an improved switch device arrangement which provide an improved connectivity when compared with the known arrangements.

A further object is to provide a network element which can be implemented in a modular and more flexible manner with respect to known devices.

Still a further object is to provide a method for cross-connecting incoming LO tributaries of synchronous signals in a more effective manner than the known methods.

These and other objects are achieved, according to the present invention, through a switch device arrangement according to claim 1, a network element according to claim 3 and a method according to claim 5. Further advantageous features of the present invention are set forth into the respective dependent claims. All the claims are deemed to be an integral part of the present description.

According to the present invention, a switch device arrangement for a network element for synchronous networks is provided, the arrangement comprises at least one input port for receiving signal frames and a multiple-stage arrangement of switch devices. The at least one port comprises HPA blocks for aligning lower order tributaries of received signal frames. Each switch device comprises a TDM matrix and each stage comprises at least one switch device. According to the present invention, each switch device of each stage generates at its output a delayed reference frame.

Thus, according to the present invention, the HPA blocks align the lower order tributaries at the input of the first stage of matrices, that is at the output of the HPA blocks frames with lower order tributaries in fixed position (i.e. AU-pointer with fixed value and reference frames in phase) are provided.

The generation of a delayed reference frame at the output of each switch device preserves the consistency between the AU-pointer value and the tributary position inside a frame, thus preserving the alignment of the tributaries along the cascaded matrix stages. Each TDM matrix in each stage is thus able to extract the single tributary and to cross-connect it; therefore, no HPA blocks are required at the input of each matrix.

In a first aspect, the present invention provides a switch device arrangement for a network element cross-connecting incoming signal frames, each of the frames comprising tributaries and pointers. The said arrangement comprises an input port for receiving signal frames, a first cross-connection stage and a second cross-connection stage connected to said first stage. Each cross-connection stage comprises at least one switch device with, in turn, at least one TDM matrix. According to the present invention, only the input port comprises HPA means for properly modifying the pointers of the signal frames. Furthermore, each switch device is designed for cross-connecting at least one part of the tributaries of the signal frames and generating at its output a delayed reference frame.

In a second aspect, the present invention provides a network element for cross-connecting incoming signal frames, with each of the frames comprising tributaries and pointers. The network element comprises at least one switch device arrangement. The said arrangement comprises an input port for receiving signal frames, a first cross-connection stage and a second cross-connection stage connected to said first stage. Each cross-connection stage comprises at least one switch device with, in turn, at least one TDM matrix. According to the present invention, only the input port comprises HPA means for properly modifying the pointers of the signal frames. Each switch device is designed for cross-connecting at least one part of the tributaries of the signal frames and generating at its output a delayed reference frame.

According to a third aspect, the present invention provides a method for cross-connecting incoming signal frames, each of the frames comprising tributaries and pointers. The said method comprises the steps of receiving signal frames, performing a first cross-connection step at a corresponding first cross-connection stage and performing a second cross-connection step at a corresponding second cross-connection stage connected to said first stage. Each cross-connection stage comprises at least one switch device with, in turn, at least one TDM matrix. According to the invention, the method comprises the steps of properly modifying (HPA) the pointers of the signal frames only at the receiving step; each of the switch devices is designed for cross-connecting at least one part of the tributaries of the signal frames and generating at its output a delayed reference frame.

Preferably, the method comprises the step of performing a third cross-connection step at a corresponding third cross-connection stage connected to said second stage, said third cross-connection stage comprising a number of switch devices corresponding to the number of switch devices of the first stage.

Preferably, the step of modifying (HPA) the pointers of the signal frames only at the receiving step comprises the step of aligning the lower order tributaries at the input of the first stage of switch devices and providing frames with lower order tributaries in a fixed position, namely having AU-pointer with fixed value and reference frames in phase.

Further features and advantages of the present invention will become clear from by the following detailed description, given by way of example and not of limitation, to be read with reference to the accompanying drawings, wherein:
- Figure 1 schematically shows the known structure of the SDH synchronous hierarchy;
- Figure 2 shows the effect of the HPA function on a STM-n frame;
- Figure 3 shows a first embodiment of switch device with HPA blocks according to the prior art;
- Figure 4 shows a second embodiment of switch device with HPA blocks according to the prior art;
- Figure 5 schematically shows a known Clos network equivalent to a NxN matrix;
- Figure 6 schematically shows the structure of a switch device arrangement for a network element for synchronous networks, implemented through a three-stage Clos network according to the prior art;
- Figure 7 schematically shows the structure of a switch device arrangement for a network element for synchronous networks implemented through a three-stage matrix arrangement according to the present invention;
- Figure 8a shows two signal frames before and after cross-connection; and
- Figure 8b shows two signal frames before and after cross-connection with delay compensation according to the present invention.

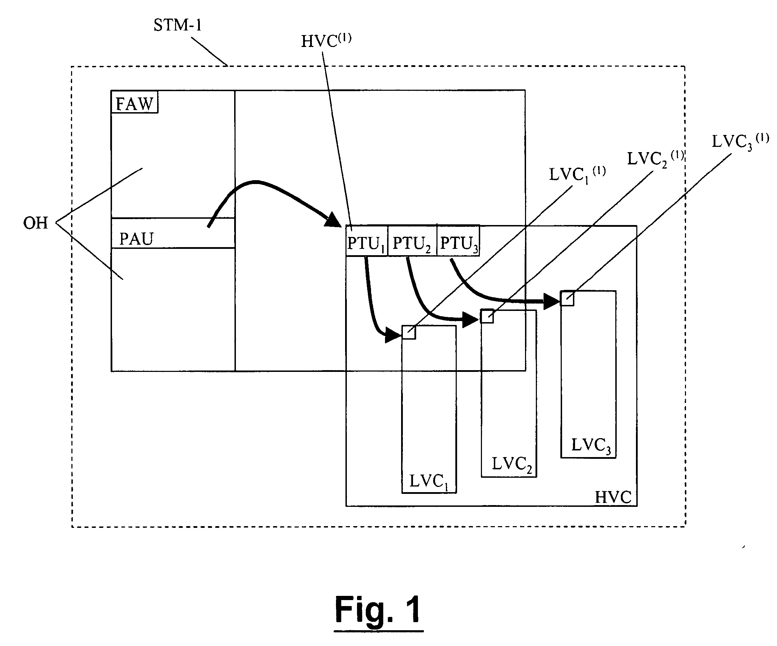

Figure 1 schematically shows the known structure of the SDH synchronous hierarchy. Tributaries coming from local networks, e.g. plesiochronous (PDH) ones, are mapped inside numerical structures LVC₁, LVC₂ ed LVC₃, termed Lower Order Virtual Containers (LVCs). The LVCs are packed into a further numerical structure called Tributary Unit (TU), together with a set of TU-pointers PTU₁, PTU₂ e PTU₃. Said TU-pointers point respectively to the position, referred to the TU frame, of the first byte LVC₁⁽¹⁾, LVC₂⁽¹⁾ ed LVC₃⁽¹⁾ of the three LVCs.

Several TUs are time-multiplexed through the well-known TDM technique. The numerical structure resulting from the TDM multiplexing is the so called Higher Order Virtual Container (HVC). The HVCs are packed into an Administrative Unit (AU), together with an AU-pointer PAU. The AU-pointer points to the position of the first byte HVC⁽¹⁾ of the HVC with respect to the AU frame containing it.

Finally, the AU is packed into a frame called Synchronous Transport Module (STM-1), together with an overhead OH containing additional information and a Frame Alignment Word (FAW), which allows to identify the starting point of each frame.

Referring to figure 1, the position of the first byte of a LVC in general does not correspond to the starting point of the TU frame; in other words, the LVC is out of phase with the TU frame. The position of the LVC inside the TU is specified by the TU-pointer.

Similarly, the position of the starting byte of the HVC in general does not correspond to the beginning of the AU frame, that is the HVC is out of phase with the AU frame. The position of the HVC inside the AU is specified by the AU-pointer.

In the HO cross-connection, the HVCs are cross-connected. Since the AU-pointer, indicating the starting byte of the HVC, is cross-connected together with the HVC, it is always possible to recover the information relating to the position of the HVCs inside the different STM-1 frames incoming at the input of the TDM matrix; AU frames need to be synchronized before cross-connection, and this is done acting on the AU-pointers of incoming frames through the above mentioned MSn/Sn_A Adaptation function.

On the contrary, in the LO cross-connection, the LVCs are cross-connected. In this case, a double step through the cascaded AU-pointer and TU-pointer is required after the switch in order to recover the information on the position of the LVCs.

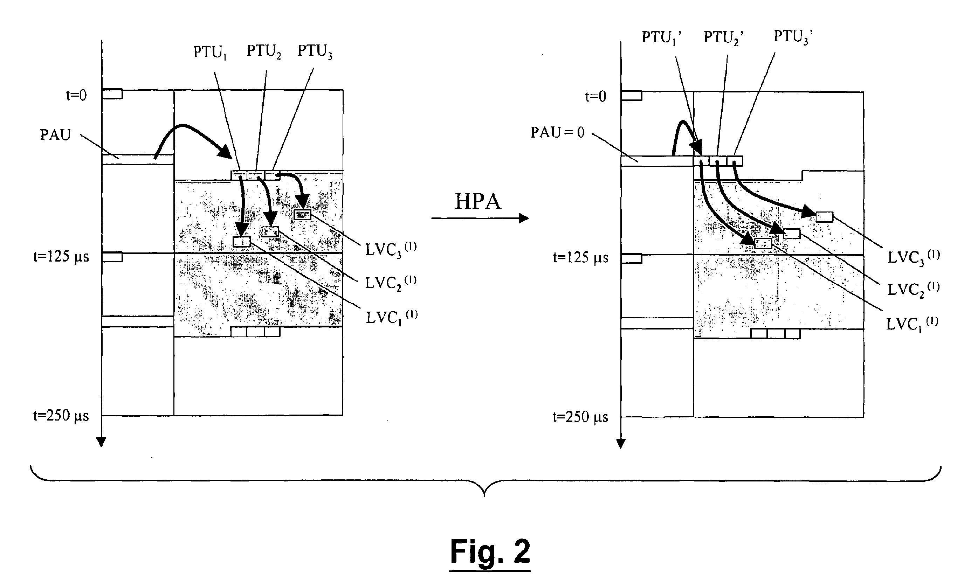

To prepare tributaries for switching, two steps are needed: the first step is identical to what happens in HO cross-connection: AU-frames coming from different nodes of the SDH network are synchronized, acting on AU-pointers via MSn/Sn_A Adaptation function. The second step consists in synchronizing the lower order tributaries acting on both AU-pointers and TU-pointers via HPA function, as described in the following detailed description of Figure 2.

Figure 2 schematically shows the effect of the HPA function on a STM-1 frame. The AU-pointer is set at a predetermined value, usually but not necessarily zero. The AU-pointer is thus indicating that the HVC starting byte is contiguous to the bytes composing the AU-pointer. The TU-pointers are then moved to the position indicated by the AU-pointer and their values are recalculated so that they point to the starting byte of the LVCs. The position of the LVCs inside the frame is not varied.

A HPA block implementing the HPA function comprises a pointer interpreter, an elastic storage and a pointer generator. The pointer interpreter allows to recover the position of the TU starting byte; the information content of each TU is written into the elastic storage. A STM-1 frame with known AU-pointer is then generated downstream of the elastic storage; the information content stored into the elastic storage is inserted tributary-by-tributary and, according to the insertion instant, the pointer generator determines and inserts the appropriate TU-pointer value for each tributary.

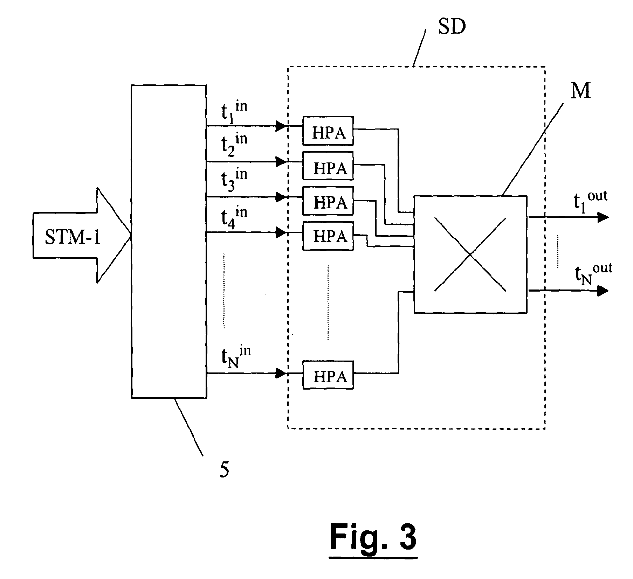

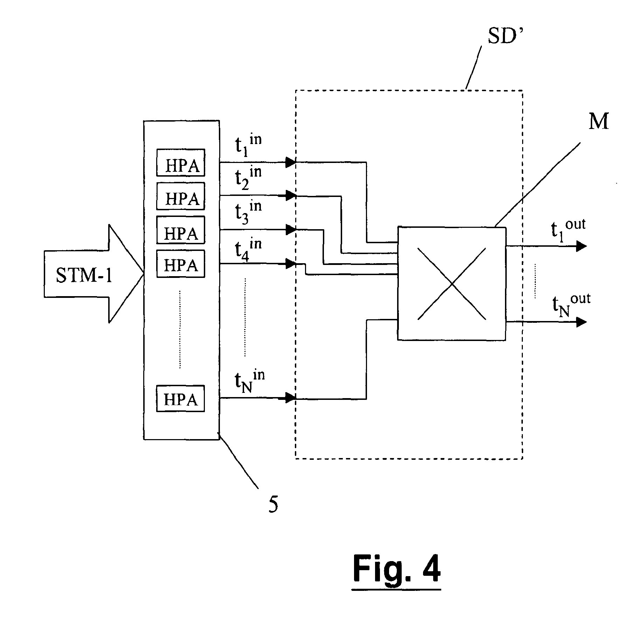

According to the above considerations, it is clear that in order to cross-connect different LO tributaries, a HPA block for each LO tributary included into the incoming STM-1 frame is required before cross-connection. This block is enough in the case in which input data flows are already synchronized at AU-frame level, but if this is not true further synchronization circuitry is needed, e.g. an MSn/Sn_A function. Therefore, a HPA block for each input of the TDM matrix must be provided, as will be better illustrated in the detailed description of Figure 3 and Figure 4.

Figure 3 schematically shows a switch device for synchronous networks in a first embodiment according to the state of the art. The switch device SD comprises a TDM matrix M and, for each incoming tributary t₁ⁱⁿ, t₂ⁱⁿ, ..., t_{N}ⁱⁿ, a HPA block at the input of the TDM matrix M. An input port 5 is provided at the input of the switch device SD, each output of the input port 5 being connected to a corresponding input of the switch device SD.

Therefore, if N is the number of tributaries included into the incoming STM-1 frame, N HPA blocks must be provided at the input of the TDM matrix M. According to this well-known arrangement, the TDM matrix M and the HPA blocks are placed on the same matrix board, while the input port 5 is placed on a different board; preferably both the boards comprise silicon substrates.

As mentioned above, in order to implement all the functions required in a HPA block, a sufficiently large integration area on the matrix **chip** must be provided; this limits the area available for the integration of the TDM matrix M. On the other hands, a reduction of the TDM matrix area is disadvantageous, since it results in a reduction of the connectivity of the switch device.

In order to overcome the problem of a reduced integration area for TDM matrix in a switch device, a known advantageous solution is to implement the HPA blocks into the input port, as shown in figure 4. Figure 4 schematically shows a switch device SD', comprising a TDM matrix M. An input port 5 is provided at the input of the switch device SD', so that each output of the input port 5 is connected to an input of the switch device SD'. The input port 5 comprises N HPA blocks, where N is the number of tributaries t₁ⁱⁿ, t₂ⁱⁿ, ..., t_{N}ⁱⁿ comprised into the incoming frame STM-1. According to this known arrangement, the lower order tributaries undergo HPA synchronization at the input port; at the input of the TDM matrix M the lower order tributaries are aligned and can thus be cross-connected. With respect to the known solution shown in Figure 3, this known arrangement has the advantage to implement HPA blocks into the input port 5, which is implemented on a separated board; the area available for the TDM matrix M integration on the matrix chip is thus preserved.

It is also known that a TDM matrix can be advantageously implemented through a Clos matrix. The advantage of such an arrangement lies in the reduction of the complexity of the matrix, that is the reduction of the number of required connections, and in the possibility to implement big matrices starting with smaller building blocks.

A Clos network comprises a plurality of matrices, divided into a plurality of cascaded stages; typically the number of stages is three; each stage comprises matrices having the same size.

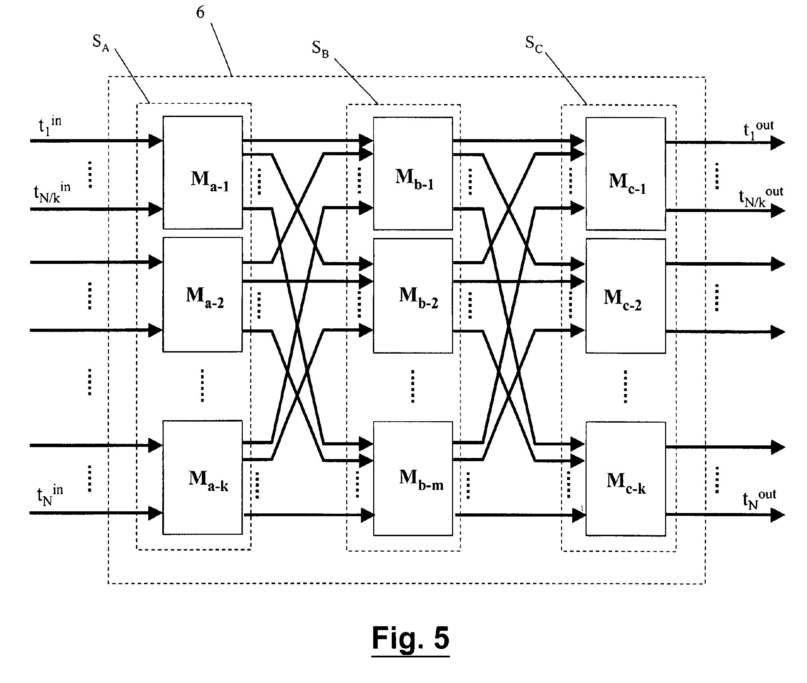

Referring to figure 5, a three-stage Clos network 6 equivalent to a NxN matrix comprises a plurality of matrices divided into three stages S_{A}, S_{B}, Sc:
- Stage S_{A}: Mₐ₋₁, Mₐ₋₂, ..., Mₐ₋ₖ;
- Stage S_{B}: M_{b-1}, M_{b-2}, ..., M_{b-m}; and
- Stage S_{C}: M_{c-1}, M_{c-2},..., M_{c-k},
where k is the number of matrices of the first stage S_{A} and the third stage Sc and m is the number of matrices of the second stage S_{B}. The number of inputs and outputs for the matrices of each stage are:
- Mₐ₋₁, Mₐ₋₂,...., Mₐ₋ₖ: N/k inputs, m outputs;
- M_{b-1}, M_{b-2},...., M_{b-m}: k inputs, k outputs;
- M_{c-1}, M_{c-2},..., M_{c-k}: m inputs, N/k outputs.

The Clos network is non-blocking if k and m are chosen so that m>=2(N/k)-1. Implementing a NxN matrix through a Clos network is advantageous with respect to a single matrix arrangement as the number of connections is lower: the number of connections in a single NxN matrix is N², while in an equivalent Clos network is 2Nm+mk²; if k and m are properly chosen, the result of this expression is lower than N².

A Clos network can then be advantageously used to implement a switch device arrangement in a network element for synchronous networks, since it reduces the complexity and improves scalability.

However, implementing a switch device arrangement in a network element by means of a Clos network results in a drawback: as each TDM matrix of each stage is implemented on a different chip, in order that each TDM matrix of the Clos network is able to find the lower order tributaries and cross-connect them, a HPA like block must be provided at each input of each matrix of the Clos network. This means that the number of required HPA blocks is increased with respect to the single TDM matrix scheme, thus increasing the complexity of the network element. Moreover, each TDM matrix results to be still limited by the HPA blocks, which are implemented on the respective matrix chips.

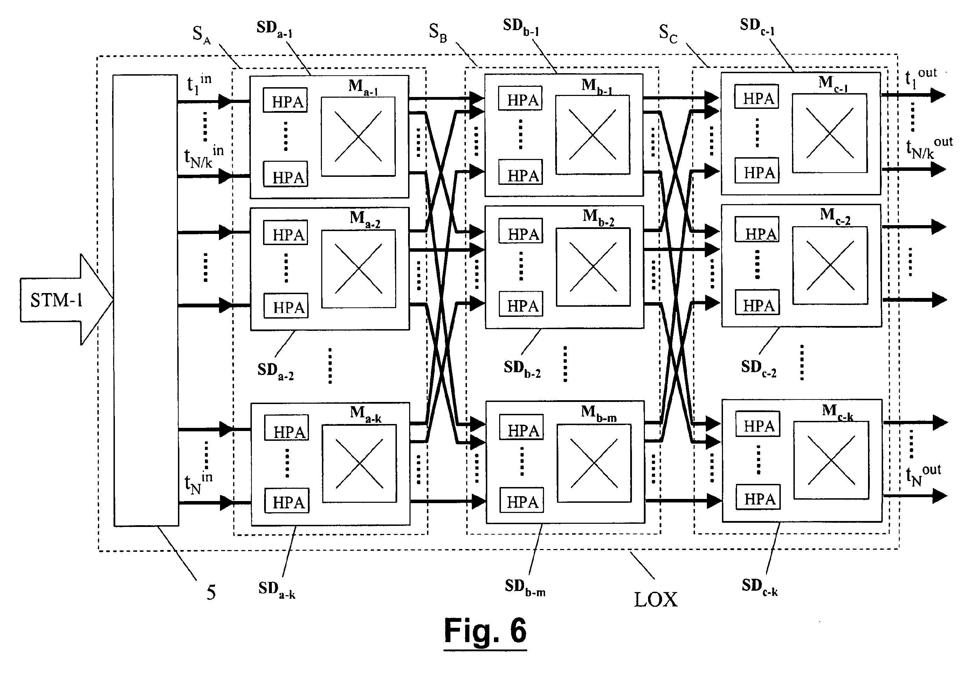

Figure 6 schematically shows a known switch device arrangement for a network element for synchronous networks; the switch device arrangement LOX includes an input port 5 and a number of switch devices SD arranged according to a Clos network scheme. Each switch device SD comprises one or more TDM matrices and HPA blocks integrated on a single chip, according to the prior art shown in Figure 3.

The switch devices SD are divided into three cascaded stages S_{A}, S_{B} and S_{C}. Both S_{A} and S_{C} stages comprise k switch devices; stage S_{B} comprises m switch devices; k and m correspond to the known "middle-stage expansion of two" technique (m=2N/k), which provides a non-blocking switching. The single TDM matrices M included into the single switch devices SD thus have the following dimensions:
- Mₐ₋₁, Mₐ₋₂, ..., Mₐ₋ₖ : N/k inputs, 2N/k outputs;
- M_{b-1}, M_{b-2}, ..., M_{b-m}: 2N/k inputs, 2N/k outputs;
- M_{c-1}, M_{c-2} ..., M_{c-k} : 2N/k inputs, N/k outputs.

As one HPA block is required for each input of each matrix, the total number of HPA blocks required in a switch device arrangement LOX according to this known solution is 5N. This results in a large area dedicated to the integration of HPA blocks on the substrate, and consequently a reduction of the substrate area available for TDM matrix integration.

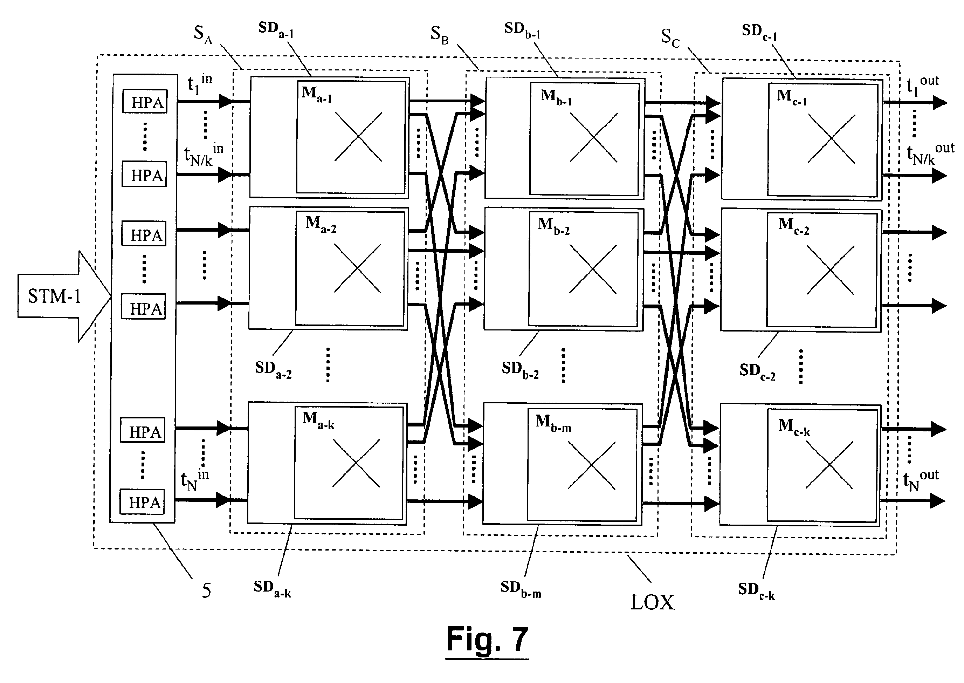

Figure 7 schematically shows a switch device arrangement for a network element for synchronous networks according to the present invention.

The switch device arrangement LOX comprises an input port 5 with HPA blocks and a number of switch devices SD, each switch device comprising at least one TDM matrix.

The input port 5 comprises a plurality of HPA blocks; in particular, a HPA block is provided for each of the LO tributaries t₁ⁱⁿ, t₂ⁱⁿ, ..., t_{N}ⁱⁿ comprised into the incoming STM-1 frame at the input of the arrangement LOX.

The switch devices are substantially arranged according to a Clos network, preferably a three stages (S_{A}, S_{B}, S_{C}) Clos network. Each stage S_{A}, S_{B}, S_{C} comprises at least one switch device SD, each switch device SD comprises one or more TDM matrices:
- Stage S_{A}: Mₐ₋₁, Mₐ₋₂, ..., Mₐ₋ₖ;
- Stage S_{B}: M_{b-1}, M_{b-2}, ..., M_{b-m}; and
- Stage S_{C}: M_{c-1}, M_{c-2}, ..., M_{c-k}.

The matrices of each stage are connected to the matrices of the following stage; in other words, the matrices Mₐ₋₁, Mₐ₋₂, ..., Mₐ₋ₖ of the first stage S_{A} are connected to the corresponding matrices M_{b-1}, M_{b-2}, ..., M_{b-m} of the second stage S_{B}; the matrices M_{b-1}, M_{b-2}, ..., M_{b-m} of the second stage S_{B} are connected to matrices M_{c-1}, M_{c-2}, ..., M_{c-k} of the third stage Sc.

The three stages S_{A}, S_{B} and S_{C} are preferably realized according to the above mentioned and known "middle-stage expansion of two" technique, in order to have non-blocking switching.

According to the present invention, the output of each HPA block of the input port 5 is connected to an input of a TDM matrix Mₐ₋₁, Mₐ₋₂, ..., Mₐ₋ₖ of the first stage S_{A}.

According to the present invention, each HPA block synchronizes the signal frames of an incoming flow. In other words, the frames at the input of the matrices of the first stage S_{A} have AU-pointer with a fixed value and tributaries in a fixed position. In a preferred embodiment, the fixed value of the AU-pointer is 0. The matrices Mₐ₋₁, Mₐ₋₂, ..., Mₐ₋ₖ of the first stage S_{A} are thus able to recover the position of the single tributaries and to perform cross-connection.

However, the Applicant has observed that cross-connection performed by the matrices Mₐ₋₁, Mₐ₋₂, ..., Mₐ₋ₖ of the first stage S_{A} introduces a time delay on tributaries, as long as few microseconds, due to the storing operations required by cross-connection.

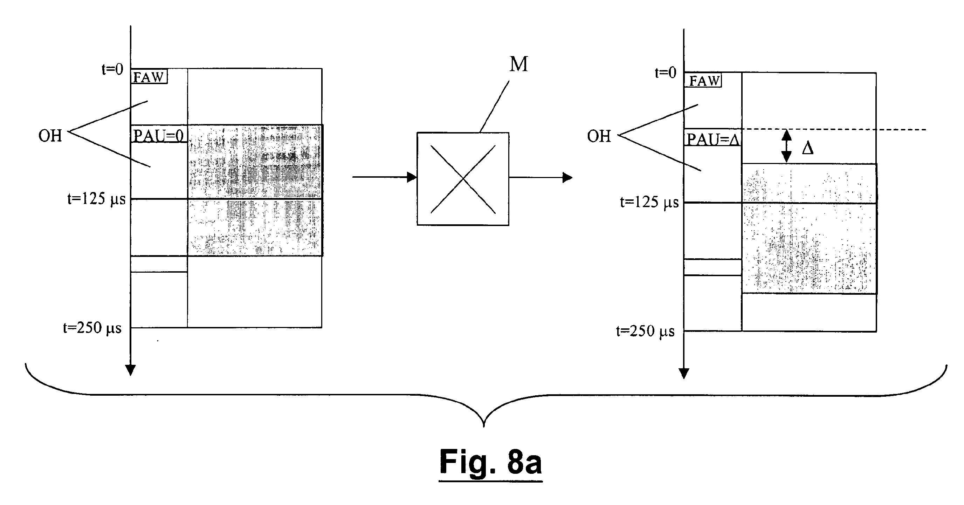

Figure 8a schematically shows two contiguous signal frames before and after cross-connection. Before cross-connection, at the input of the TDM matrix the frames are aligned, that is the position of the starting byte of the tributary corresponds to the position indicated by the AU-pointer, which has been set to a predetermined value by the HPA block. At the output of the TDM matrix M, however, the tributary is out of phase with the reference frame of a delay □ (delta), as a consequence of the cross-connection operations. The AU-pointer, if kept fixed to the predetermined value imposed by the HPA block, is then no more consistent with the actual position of the starting byte of the tributary: so it must be modified at the output of the TDM matrix.

In other words, the TDM matrix is not transparent to the alignment implemented by the HPA function.

Additionally, the Applicant has noticed that the delay □ (delta) introduced by the TDM matrix of the first stage S_{A}, and the consequent modification of the AU-pointer, would require a further alignment by HPA blocks at the input of each matrix of each cascaded stage S_{B} and S_{C} of the matrix arrangement; this solution would lead to a structure similar to the one described above with reference to figure 6, and to the disadvantages of said structure: the number of required HPA blocks would be 5N, as in the structure described above.

The Applicant has overcome this problem by generating a delayed reference frame in output of each TDM matrix, in order to compensate the delay introduced by the TDM matrix itself.

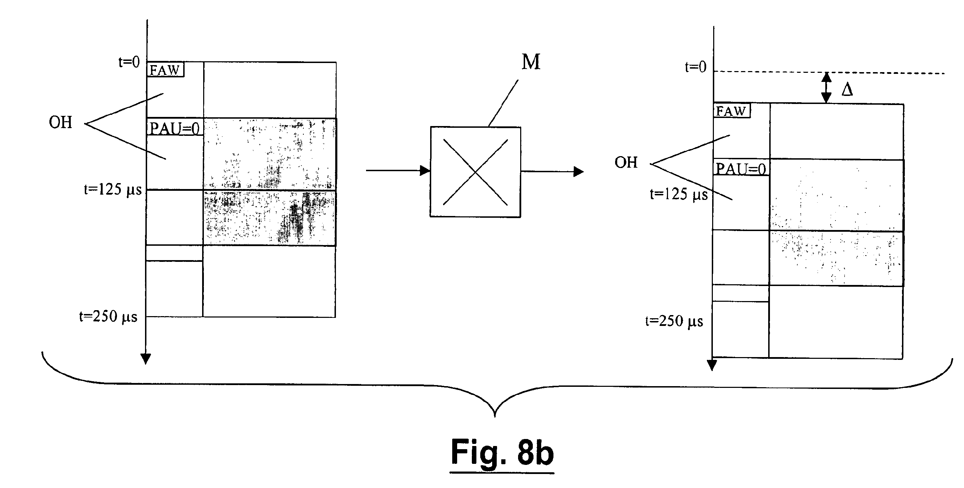

Figure 8b shows two contiguous signal frames before and after cross-connection, where at the output of the TDM matrix M a delayed reference frame is generated, and cross-connected lower order tributaries are inserted into said output frame.

By delaying both the reference frame and the tributary of the same amount □ (delta), at the output of each TDM matrix the frame and the tributary are aligned. In other words, the predetermined value of the AU-pointer is consistent with the actual position of starting byte of the tributary both at the input and at the output of the TDM matrix.

Further HPA blocks at the input of each TDM matrix M of the second and third stages S_{B} and S_{C} are then unnecessary, since each TDM matrix is transparent to the alignment of frames performed by the HPA blocks of the input port. In other words, once the AU-frame alignment has been performed at the input port, it is preserved across the entire TDM matrix arrangement.

The main advantage of the present invention is the reduction of the number of required HPA blocks in a switch device. According to the known arrangement illustrated in figure 6, the number of required HPA blocks is 5N, where N is the number of incoming streams. According to the present invention, the number of required HPA blocks is N, since only one HPA block for each incoming tributary is required.

Consequently, according to the present invention it is possible to implement switch devices which show an incremented connectivity compared with the known solutions having matrix chips with the same area. This results in an increased connectivity of the overall network element.

A further advantage of the present invention consists in the possibility to integrate the HPA blocks on a separate substrate, thus increasing the device modularity.

There have thus been shown and described a novel switch device arrangement, a novel network element and a novel method which fulfil all the objects and advantages sought therefore. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention are deemed to be covered by the invention which is limited only by the claims which follow.

## Claims

1. A switch device arrangement (LOX) for a network element cross-connecting incoming signal frames (STM-1), each of the frames comprising tributaries and pointers, said arrangement (LOX) comprising an input port (5) for receiving signal frames, **characterized in that** it comprises a first cross-connection stage (S_{A}) and a second cross-connection stage (S_{B}) connected to said first stage (S_{A}), each cross-connection stage (S_{A}, S_{B}) comprising at least one switch device (SD) with, in turn, at least one TDM matrix (M), and **in that** only the input port (5) comprises means (HPA) for properly modifying the pointers of the signal frames, each switch device (SD) being designed for cross-connecting at least one part of the tributaries of the signal frames and generating at its output a delayed reference frame.

2. The switch device arrangement according to claim 1, **characterized by** further comprising at least a third cross-connection stage (S_{c}) connected to said second stage (S_{b}), said third cross-connection stage (S_{c}) comprising a number of switch devices (SD) corresponding to the number of switch devices (SD) of the first stage (S_{A}).

3. A network element for cross-connecting incoming signal frames (STM-1) with each of the frames comprising tributaries and pointers, the network element comprising at least one switch device arrangement (LOX), said arrangement (LOX) comprising an input port (5) for receiving signal frames, **characterized in that** it comprises a first cross-connection stage (S_{A}) and a second cross-connection stage (S_{B}) connected to said first stage (S_{A}), each cross-connection stage (S_{A}, S_{B}) comprising at least one switch device (SD) with, in turn, at least one TDM matrix (M), and **in that** only the input port (5) comprises means (HPA) for properly modifying the pointers of the signal frames, each switch device (SD) being designed for cross-connecting at least one part of the tributaries of the signal frames and generating at its output a delayed reference frame.

4. The network element according to claim 3, **characterized in that** the at least one switch device arrangement comprises at least a third cross-connection stage (S_{c}) connected to said second stage (S_{b}), said third cross-connection stage (S_{c}) comprising a number of switch devices (SD) corresponding to the number of switch devices (SD) of the first stage (S_{A}).

5. A method for cross-connecting incoming signal frames (STM-1), each of the frames comprising tributaries and pointers, said method comprising the steps of receiving signal frames, and further **characterized by** the steps of performing a first cross-connection step at a corresponding first cross-connection stage (S_{A}), performing a second cross-connection step at a corresponding second cross-connection stage (S_{B}) connected to said first stage (S_{A}), each cross-connection stage (S_{A}, S_{B}) comprising at least one switch device (SD) with, in turn, at least one TDM matrix (M), performing the steps of properly modifying (HPA) the pointers of the signal frames only at the receiving step (5), and in that each of the switch devices (SD) is designed for cross-connecting at least one part of the tributaries of the signal frames and generating at its output a delayed reference frame.

6. The method according to claim 5, **characterized by** the step of performing a third cross-connection step at a corresponding third cross-connection stage (S_{c}) connected to said second stage (S_{b}), said third cross-connection stage (S_{c}) comprising a number of switch devices (SD) corresponding to the number of switch devices (SD) of the first stage (S_{A}).

7. The method according to claim 5 or 6, **characterized in that** the step of modifying (HPA) the pointers of the signal frames only at the receiving step (5) comprises the step of aligning the lower order tributaries at the input of the first stage of switch devices and providing frames with lower order tributaries in a fixed position, namely having AU-pointer with fixed value and reference frames in phase.

## Patentansprüche

1. Umschaltereinrichtungsanordnung (LOX) für ein Netzelement, das ankommende Signalrahmen (STM-1) untereinander verbindet, wobei jeder der Rahmen Zubringer und Pointer umfasst, wobei die Anordnung (LOX) einen Eingangsanschluss (5) zum Empfangen von Signalrahmen umfasst, **dadurch gekennzeichnet, dass** sie eine erste Querverbindungsstufe (S_{A}) und eine mit der ersten Querverbindungsstufe (S_{A}) verbundene zweite Querverbindungsstufe (S_{B}) umfasst, wobei jede Querverbindungsstufe (S_{A}, S_{B}) wenigstens eine Umschaltereinrichtung (SD) mit wiederum wenigstens einer TDM-Matrix (M) umfasst, und **dadurch**, dass nur der Eingangsanschluss (5) Mittel (HPA) zum geeigneten Modifizieren der Pointer der Signalrahmen umfasst, wobei jede Umschaltereinrichtung (SD) zum Verbinden wenigstens eines Teils der Zubringer der Signalrahmen untereinander und Erzeugen eines verzögerten Bezugsrahmens an ihrem Ausgang ausgelegt ist.

2. Umschaltereinrichtungsanordnung nach Anspruch 1, **dadurch gekennzeichnet, dass** sie ferner wenigstens eine mit der zweiten Stufe (S_{b}) verbundene dritte Querverbindungsstufe (S_{C}) umfasst, wobei die dritte Querverbindungsstufe (S_{C}) eine Anzahl von Umschaltereinrichtungen (SD) umfasst, die der Anzahl von Umschaltereinrichtungen (SD) der ersten Stufe (S_{A}) entspricht.

3. Netzelement zum Verbinden ankommender Signalrahmen (STM-1) untereinander, wobei jeder der Rahmen Zubringer und Pointer umfasst, wobei das Netzelement wenigstens eine Umschaltereinrichtungsanordnung (LOX) umfasst, wobei die Anordnung (LOX) einen Eingangsanschluss (5) zum Empfangen von Signalrahmen umfasst, **dadurch gekennzeichnet, dass** sie eine erste Querverbindungsstufe (S_{A}) und eine mit der ersten Querverbindungsstufe (S_{A}) verbundene zweite Querverbindungsstufe (S_{B}) umfasst, wobei jede Querverbindungsstufe (S_{A}, S_{B}) wenigstens eine Umschaltereinrichtung (SD) mit wiederum wenigstens einer TDM-Matrix (M) umfasst, und **dadurch**, dass nur der Eingangsanschluss (5) Mittel (HPA) zum geeigneten Modifizieren der Pointer der Signalrahmen umfasst, wobei jede Umschaltereinrichtung (SD) zum Verbinden wenigstens eines Teils der Zubringer der Signalrahmen untereinander und Erzeugen eines verzögerten Bezugsrahmens an ihrem Ausgang ausgelegt ist.

4. Netzelement nach Anspruch 3, **dadurch gekennzeichnet, dass** die wenigstens eine Umschaltereinrichtungsanordnung wenigstens eine mit der zweiten Stufe (S_{b}) verbundene dritte Querverbindungsstufe (S_{C}) umfasst, wobei die dritte Querverbindungsstufe (S_{C}) eine Anzahl von Umschaltereinrichtungen (SD) umfasst, die der Anzahl von Umschaltereinrichtungen (SD) der ersten Stufe (S_{A}) entspricht.

5. Verfahren zum Verbindungen ankommender Signalrahmen (STM-1) untereinander, wobei jeder der Rahmen Zubringer und Pointer umfasst, wobei das Verfahren die Schritte des Empfangens von Signalrahmen umfasst und ferner durch die Schritte **gekennzeichnet** ist: Ausführen eines ersten Querverbindungsschritts an einer entsprechenden ersten Querverbindungsstufe (S_{A}), Ausführen eines zweiten Querverbindungsschritts an einer mit der ersten Querverbindungsstufe (S_{A}) verbundenen entsprechenden zweiten Querverbindungsstufe (S_{B}), wobei jede Querverbindungsstufe (S_{A}, S_{B}) wenigstens eine Umschaltereinrichtung (SD) mit wiederum wenigstens einer TDM-Matrix (M) umfasst, die die Schritte des geeigneten Modifizierens (HPA) der Pointer der Signalrahmen nur am Empfangsschritt (5) umfasst, und **dadurch**, dass jede der Umschaltereinrichtungen (SD) zum Querverbinden wenigstens eines Teils der Zubringer der Signalrahmen und Erzeugen eines verzögerten Bezugsrahmens an ihrem Ausgang ausgelegt ist.

6. Verfahren nach Anspruch 5, **gekennzeichnet durch** den Schritt: Ausführen eines dritten Querverbindungsschritts an einer mit der zweiten Stufe (S_{b}) verbundenen entsprechenden dritten Querverbindungsstufe (S_{C}), wobei die dritte Querverbindungsstufe (S_{C}) eine Anzahl von Umschaltereinrichtungen (SD) umfasst, die der Anzahl von Umschaltereinrichtungen (SD) der ersten Stufe (S_{A}) entspricht.

7. Verfahren nach Anspruch 5 oder 6, **dadurch gekennzeichnet, dass** der Schritt des Modifizierens (HPA) der Pointer der Signalrahmen nur am Empfangsschritt (5) den Schritt umfasst: Ausrichten von Zubringern einer niedrigeren Ordnung am Eingang der ersten Stufe der Umschaltereinrichtungen und Bereitstellen von Rahmen mit Zubringern einer niedrigeren Ordnung an einer festen Position, die nämlich AU-Pointer mit festem Wert und Bezugsrahmen in Phase aufweisen.

## Revendications

1. Arrangement de dispositifs de commutation (LOX) pour un élément de réseau interconnectant des trames de signal d'entrée (STM-1), chacune des trames comprenant des affluents et des pointeurs, ledit arrangement (LOX) comprenant un port d'entrée (5) pour recevoir des trames de signal, **caractérisé en ce qu'**il comprend un premier étage d'interconnexion (S_{A}) et un second étage d'interconnexion (S_{B}) connecté audit premier étage (S_{A}), chaque étage d'interconnexion (S_{A}, S_{B}) comprenant au moins un dispositif de commutation (SD) avec, à son tour, au moins une matrice TDM (M), et **caractérisé en ce que** uniquement le port d'entrée (5) comprend un moyen (HPA) pour correctement modifier les pointeurs des trames de signal, chaque dispositif de commutation (SD) étant conçu pour interconnecter au moins une partie des affluents des trames de signal et générer au niveau de sa sortie une trame de référence retardée.

2. Arrangement de dispositifs de commutation selon la revendication 1, **caractérisé en ce qu'**il comprend en outre au moins un troisième étage d'interconnexion (S_{c}) connecté audit second étage (S_{b}), ledit troisième étage d'interconnexion (S_{c}) comprenant un certain nombre de dispositifs de commutation (SD) correspondant au nombre de dispositifs de commutation (SD) du premier étage (S_{A}).

3. Elément de réseau pour interconnecter des trames de signal entrant (STM-1) avec chacune des trames comprenant des affluents et des pointeurs l'élément de réseau comprenant au moins un arrangement de dispositifs de commutation (LOX), ledit arrangement (LOX) comprenant un port d'entrée (5) pour recevoir des trames de signal, **caractérisé en ce qu'**il comprend un premier étage d'interconnexion (S_{A}) et un second étage d'interconnexion (S_{B}) connecté audit premier étage (S_{A}), chaque étage d'interconnexion (S_{A}, S_{B}) comprenant au moins un dispositif de commutation (SD) avec, à son tour, au moins une matrice TDM (M), et **caractérisé en ce que** uniquement le port d'entrée (5) comprend un moyen (HPA) pour correctement modifier les pointeurs des trames de signal, chaque dispositif de commutation (SD) étant conçu pour interconnecter au moins une partie des affluents des trames de signal et générer au niveau de sa sortie une trame de référence retardée.

4. Elément de réseau selon la revendication 3, **caractérisé en ce que** le au moins un arrangement de dispositif de commutation comprend au moins un troisième étage d'interconnexion (S_{c}) connecté audit second étage (S_{b}), ledit troisième étage d'interconnexion (S_{c}) comprenant un certain nombre de dispositifs de commutation (SD) correspondant au nombre de dispositifs de commutation (SD) du premier étage (S_{A}).

5. Procédé pour interconnecter des trames de signal entrant (STM-1), chacune des trames comprenant des affluents et des pointeurs, ledit procédé comprenant l'étape consistant à recevoir des trames de signal et étant en outre **caractérisé par** les étapes consistant à exécuter une première étape d'interconnexion au niveau d'un premier étage d'interconnexion correspondant (S_{A}), exécuter une seconde étape d'interconnexion au niveau d'un second étage d'interconnexion correspondant (S_{B}) connecté audit premier étage (S_{A}), chaque étage d'interconnexion (S_{A}, S_{B}) comprenant au moins un dispositif de commutation (SD) avec, à son tour, au moins une matrice TDM (M) exécutant les étapes consistant à modifier correctement (HPA) les pointeurs des trames de signal uniquement au niveau de l'étape de réception (5), et **caractérisé en ce que** chacun des dispositifs de commutation (SD) est conçu pour interconnecter au moins une partie des affluents des trames de signal et générer au niveau de sa sortie une trame de référence retardée.

6. Procédé selon la revendication 5, **caractérisé par** l'étape consistant à exécuter une troisième étape d'interconnexion au niveau d'un troisième étage d'interconnexion correspondant (S_{c}) connecté audit second étage (S_{b}), ledit troisième étage d'interconnexion (S_{c}) comprenant un certain nombre de dispositifs de commutation (SD) correspondant au nombre de dispositifs de commutation (SD) du premier étage (S_{A}).

7. Procédé selon la revendication 5 ou la revendication 6, **caractérisé en ce que** l'étape consistant à modifier (HPA) les pointeurs des trames de signal uniquement au niveau de l'étape de réception (5) comprend l'étape consistant à aligner les affluents d'ordre inférieur au niveau de l'entrée du premier étage de dispositifs de commutation et à délivrer des trames avec des affluents d'ordre inférieur dans une position fixée, c'est-à-dire avoir un pointeur AU avec une valeur fixée et des trames de référence en phase.
